# EUROPÄISCHE PATENTSCHRIFT

(11) **EP 2 918 199 B1**
(45) Veröffentlichungstag und Bekanntmachung des Hinweises auf die Patenterteilung: **05.12.2018**
(21) Anmeldenummer: 15156330.1
(22) Anmeldetag: 24.02.2015
(51) Int. Cl.: A47J 31/44

(54) **Elektrisch betriebene Kaffeemaschine mit Tassenablage**
Electric coffee machine with cup storage
Machine à café électrique équipé d'un porte-tasse

(30) Priorität: 13.03.2014 DE 102014204642
(43) Veröffentlichungstag der Anmeldung: 16.09.2015
(73) Patentinhaber: WMF Group GmbH, 73312 Geislingen/Steige (DE)
(72) Erfinder: Witt, Axel, 73321 Geislingen (DE); Bockwoldt, Peter, 73095 Albershausen (DE)
(74) Vertreter: Pfenning, Meinig & Partner mbB

(56) Entgegenhaltungen:
- EP-A1- 0 761 150
- WO-A1-2012/032554
- DE-A1- 3 644 947
- FR-A1- 2 713 071

## Beschreibung

Die vorliegende Erfindung bezieht sich auf eine elektrisch betriebene Kaffeemaschine gemäß des Oberbegriffes aus Anspruch 1 mit einer Tassenablage, die wie im kennzeichnenden Teil des Anspruchs 1 beschrieben ist, ausgebildet ist.

Auf dem Markt der elektrisch betriebenen Kaffeemaschinen werden im Wesentlichen zwei Arten von Kaffeemaschinen unterschieden. Die sogenannten Halbautomaten und die Vollautomaten. Bei den Halbautomaten oder Siebträgermaschinen (siehe beispielsweise EP 2 314 188 A1) wird aus einer neben der Kaffeemaschine stehenden Kaffeemühle in einen Siebträger gemahlen. Der Siebträger wird dann in die Kaffeemaschine eingehängt und die Brühung wird ausgelöst. Das benötigte Geschirr (also die nachfolgend ganz allgemein als Tassen bezeichneten Behältnisse wie beispielsweise Espressotassen, Kaffeebecher, Gläser,...) wird oft auf einer Tassenablage auf der Maschinenoberseite bereitgestellt. Diese Tassenablage ist in der Regel indirekt über die Maschinenabwärme oder aktiv über elektrische Leitungen oder Heißwasser-/Dampfleitungen beheizt, um die Tassen vorzuwärmen. Die Vollautomaten (siehe beispielsweise EP 1 955 624 A1 sowie EP 0 605 750 A1) sind mit eingebauten Mahlwerken bzw. Kaffeemühlen ausgestattet, die sich in der Regel an oder auf der Maschinenoberseite befinden. Die Produktbehälter mit den Kaffeebohnen sind bei kleinen Bevorratungsmengen zum Teil oder ganz in die Kaffeemaschine integriert. In der gewerblichen Gastronomie sind meist große oder zumindest größere Bevorratungsmengen gewünscht, sodass die Behälter auf der Maschinenoberseite hervorstehen. Die Befüllung erfolgt nach Abnahme der Behälterdeckel von oben. Ein Platz für eine Tassenablage ist nicht vorhanden.

Die FR 2713071 beschreibt: Eine Kaffeemaschine mit ausziehbarer und mit hochklappbarer Front. Letzteres ermöglicht einen Wartungszugang.

Somit kann bei Kaffeemaschinen mit externen Mühlen bzw. bei Kaffeemaschinen ohne integrierte Vorratsbehältnisse eine obere Fläche der Maschine als Tassenablage benutzt werden. Bei Maschinen mit integrierten Mühlen bzw. Vorratsbehältnissen ist die obere Fläche der Maschine durch Produktbehälter belegt und kann nicht für eine Tassenablage verwendet werden.

Aufgabe der vorliegenden Erfindung ist es eine elektrisch betriebene Kaffeemaschine, die mindestens einen Bevorratungsraum (insbesondere für ungemahlene Kaffeebohnen) und ggf. auch ein in das Gehäuse der Kaffeemaschine integriertes Mahlwerk aufweist zur Verfügung zu stellen, die zusätzlich auch eine vorzugsweise beheizbare Tassenablagemöglichkeit zur Verfügung stellt.

Diese Aufgabe wird durch eine Kaffeemaschine gemäß Anspruch 1 gelöst. Vorteilhafte Ausführungsvarianten lassen sich jeweils den abhängigen Ansprüchen entnehmen.

Nachfolgend wird die vorliegende Erfindung zunächst allgemein, dann anhand eines Ausführungsbeispiels beschreiben. Die im Ausführungsbeispiel in Kombination miteinander dargestellten Einzelmerkmale bzw. Bauelemente müssen im Rahmen der Erfindung nicht in der gezeigten Art und Weise realisiert bzw. miteinander verbunden werden. Insbesondere können einzelne Merkmale bzw. Bauelemente auch weggelassen werden oder mit anderen gezeigten Bauelementen bzw. Merkmalen auch auf andere Art und Weise kombiniert werden. Bereits einzelne der gezeigten Merkmale können für sich eine Bereicherung des Standes der Technik darstellen.

Eine erfindungsgemäße Kaffeemaschine ist in Anspruch 1 beschrieben.

Dabei kann die Tassenablage grundsätzlich so ausgebildet sein, dass Behältnisse jeglicher Art und Größe (also Espressotassen, Kaffeetassen, Kaffeebecher, Gläser,...) die zur Aufnahme des fertigen Kaffeegetränkes gedacht sind, in leerem Zustand auf der Tassenablage abgestellt werden können. Dennoch wird nachfolgend der Einfachheit halber nicht von einer "Behältnisablage" sondern von einer "Tassenablage" gesprochen.

Der/die Bevorratungsraum/räume ist/sind bevorzugt zur Aufnahme eines Kaffeeproduktes ausgebildet (vorzugsweise sind mehrere solche Bevorratungsräume vorhanden, in die unterschiedliche Sorten von ungemahlenen Kaffeebohnen eingefüllt werden können).

Grundsätzlich ist es aber auch denkbar, in den nach dem Verschieben und/oder Verschwenken der Tassenablage zugänglichen Bevorratungsräumen (oder dem Bevorratungsraum) bereits gemahlenes Kaffeemehl einzufüllen. Schließlich ist es auch denkbar, einen oder mehrere solche(n) Bevorratungsraum/räume zur Aufnahme von Wasser für die Kaffeezubereitung, von Zusatzprodukten wie beispielsweise Schokoladenpulver oder von Aromazusätzen wie beispielsweise Sirup oder dergleichen auszubilden.

Vorzugsweise steht der Bevorratungsraum (entsprechendes gilt beim Vorhandensein mehrerer Bevorratungsräume für jeden solchen Raum) für Kaffeebohnen in Verbindung mit einem/dem Mahlwerk der Kaffeemaschine (die Verbindung kann beispielsweise über eine Schütte erfolgen). Das bzw. ein solches Mahlwerk hat vorteilhafterweise wiederum eine Verbindung (beispielsweise in Form einer Rutsche) für gemahlenes Kaffeemehl zur Brühgruppe. Vorzugsweise ist/sind der/die Bevorratungsraum/räume, das/die Mahlwerk(e) und zumindest Teile der Brühgruppe (insbesondere die Brühkammer derselben) zumindest abschnittsweise, bevorzugt vollständig in das Gehäuse der Kaffeemaschine integriert. Insbesondere wenn es sich bei dem/den Bevorratungsraum/räumen um einen Raum bzw. Räume handelt, der/die zur Aufnahme eines Kaffeeproduktes dient/dienen, kann/können diese(r) vollständig in das Gehäuse der Kaffeemaschine integriert sein.

Vorzugsweise weist die Kaffeemaschine genau einen oder genau zwei nach dem Verschwenken und/oder Verschieben zum Einfüllen des/der Kaffeeprodukte(s) (beispielsweise von unterschiedlichen Bohnensorten je Bevorratungsraum) zugängliche(n) Bevorratungsraum/räume auf.

Das Gehäuse der Kaffeemaschine weist bevorzugt neben der Oberseite bzw. seinem Deckel vier Seitenwände und eine Unterseite bzw. einen Boden auf (insbesondere handelt es sich beim Gehäuse der Kaffeemaschine um ein im Wesentlichen kastenförmiges Gehäuse, das jedoch Aussparungen beispielsweise zum Einhängen eines Siebträgers aufweisen kann). Die Tassenablage der Oberseite des Gehäuses (bzw. die Oberseite selbst, wenn diese als Tassenablage ausgebildet ist) ist dann relativ zu den Seitenwänden und der Unterseite verschiebbar und/oder verschwenkbar.

Bei der erfindungsgemäßen Kaffeemaschine kann es sich sowohl um einen Halbautomaten, als auch um einen Vollautomaten, deren Grundprinzipien aus dem Stand der Technik bekannt sind, handeln.

Erste gemäß der Erfindung vorteilhafterweise realisierbare Merkmale (die einzeln, jedoch auch in beliebiger Kombination miteinander realisiert werden können - dies gilt auch für die weiteren abhängigen Ansprüche) beschreiben die abhängigen Ansprüche 2 bis 3.

Gemäß Anspruch 3 ist bevorzugt genau eine der drei beschriebenen Varianten zur Heizung realisiert. Es können aber auch zwei beliebige der vorgestellten Varianten (oder auch alle drei Varianten) gleichzeitig realisiert werden.

Die Beheizung der Tassenablage kann aber auch weggelassen werden (unbeheizte Tassenablage gemäß der Erfindung).

Weitere vorteilhafterweise realisierbare Merkmale beschreibt Anspruch 4.

Auch eine Konstruktion, bei der die Tassenablage relativ zu den übrigen Bauelementen des Gehäuses (oder der Kaffeemaschine) verschiebbar und verschwenkbar ist, ist erfindungsgemäß realisierbar: Dabei kann beispielsweise die Tassenablage von der Vorderseite (die Bedienelemente der Kaffeemaschine tragen kann) zur Rückseite der Kaffeemaschine verschiebbar sein, wobei die Tassenablage sich mit ihrem vorderen Rand mit zunehmender Verschiebungsstrecke nach hinten bzw. zur Maschinenrückseite hin zunehmend anhebt. In der Regel ist die Tassenablage dann mit einer zum Abfangen wegrutschender Tassen ausgebildeten Einrichtung und/oder mit einer Einrichtung, die ein Verrutschen von aufgestellten Tassen verhindert, zu versehen. Eine zum Abfangen wegrutschender Tassen ausgebildete Einrichtung kann beispielsweise in Form eines hochstehenden Gitters, Randes oder dergleichen ausgebildet sein. Diese kann auf drei von vier Seiten der Tassenablage (vorzugsweise auf allen vier Seiten, z.B. als umlaufender Rand oder umlaufendes Gitter) ausgebildet sein. Eine Einrichtung, die ein Verrutschen von aufgestellten Tassen verhindert, kann eine auf der Oberseite der Tassenablage (die dem Inneren des Gehäuses der Kaffeemaschine abgewandt ist) angeordnete Antirutschschicht oder -matte oder dergleichen sein.

Weitere vorteilhafterweise realisierbare Merkmale lassen sich dem abhängigen Anspruch 5 entnehmen.

Nach dem Einhängen der Tassenablage kann eine Sicherung derselben bzw. der Baugruppe gegen ein unabsichtliches Lösen vom Gestell und/oder vom Gehäuse durch Sicherungselemente wie beispielsweise Schrauben erfolgen.

Weitere vorteilhafterweise realisierbare Merkmale lassen sich den abhängigen Ansprüchen 6 und 7 entnehmen.

Gemäß Anspruch 7 erfolgt eine Ausbildung vorzugsweise so, dass die einzelnen Lagen des mehrlagigen Aufbaus in Richtung von der Gehäuseoberseite zur Gehäuseunterseite der Kaffeemaschine gesehen (also senkrecht zur Ebene der Tassenablage gesehen) in genau der in diesem Anspruch beschriebenen Reihenfolge und jeweils paarweise aneinandergrenzend ausgebildet sind (letzteres um eine möglichst geringe Dicke bzw. Bauhöhe der Tassenablage zu erhalten).

Die in Bezug auf das Innere des Gehäuses der Kaffeemaschine entfernteste, also obenliegende, erste Lage dient somit dem unmittelbaren Aufsetzen der Tassen. Die unterhalb dieser ersten Lage ausgebildete zweite Lage ist (beispielsweise durch Einarbeiten von Heizschlangen oder dergleichen zum elektrischen Heizen) ausgebildet, die erste Lage und somit indirekt die darauf abgelegten Tassen zu erwärmen. Die unterhalb der zweiten, also der Heizlage ausgebildete dritte und somit dem Inneren der Kaffeemaschine und dem/den dort befindlichen Bevorratungsraum/räumen zugewandte Lage ist als Isolationslage ausgebildet (beispielsweise können zum Ausbilden dieser Lage Wärmeisolationsplatten, z.B. aus künstlichen organischen Schäumen wie z.B. Polyurethan-Schaum, verwendet werden) und isoliert somit das Innere der Kaffeemaschine thermisch von der zum Heizen der Tassen ausgebildeten, zweiten Lage.

Die mehreren Lagen bzw. Schichten des mehrlagigen Aufbaus können sich somit sandwichartig aufbauen, um eine niedrige Gesamthöhe der Tassenablage zu erhalten.

Eine gemäß der Ansprüche 6 und 7 als selbsttragende, mehrlagige Baugruppe realisierte Tassenablage kann erfindungsgemäß die eigentliche Ablage (erste Lage), die zweite Lage (beispielsweise: Heizfolie zum Beheizen der ersten Lage), die dritte Lage als thermische Isolationslage (beispielsweise auch in Form einer Isoliermatte), zwei seitliche Auszugschienen (beispielsweise Teleskopschienen wie bei Schubladen), die in einem seitlichen Rahmen eines Gestells des Gehäuses der Kaffeemaschine montiert sind, und zusätzlich zur dritten, thermischen Isolationslage auch eine unterhalb letzterer angeordnete, also dem Inneren des/der Bevorratungsraums/räumen zugewandte, vierte Lage (beispielsweise: ein Trennblech) aufweisen. Somit kann die Tassenablage mittels der Teleskopschienen auch vollgestapelt mit Kaffeegeschirr bzw. den Tassen nach hinten geschoben werden, um einen Zugang zum Nachfüllen des/der Bevorratungsraums/räume mit Kaffeebohnen zu ermöglichen (und ggfs. ebenfalls einen Zugang zur Mahlgradverstellung der Mühle(n) der Kaffeemaschine freizugeben).

Weitere vorteilhafterweise realisierbare Merkmale lassen sich dem abhängigen Anspruch 8 entnehmen.

Gemäß dieser Ausführungsform kann die Kaffeemaschine auch mehrere jeweils voneinander unabhängig verschiebbare und/oder verschwenkbare Ablagenabschnitte aufweisen, obwohl lediglich ein Bevorratungsraum vorhanden ist. Letzterer ist dann bevorzugt über genau einen der Ablagenabschnitte nach Verschieben und/oder Verschwenken desselben nach hinten oder auf die Seite zugänglich.

Gegenüber dem Stand der Technik weist die vorliegende Erfindung eine Reihe von Vorteilen auf.

So schafft die vorliegende Erfindung eine große, beheizbare Tassenablage auf einer Kaffeemaschine, die gleichzeitig einen benutzerfreundlichen Zugang zu den Produktbehältern (bzw. Bevorratungsräumen) der Kaffeemaschine ermöglicht, ohne dass das Kaffeegeschirr bzw. die Tassen abgeräumt werden müssten.

In beheizbarer Form sorgt der mehrlagige Aufbau dafür, dass die Heizung der Tassenablage mit ihrer Abwärme die Kaffeebohnen in den Produktbehältern nicht erwärmt (somit wird ein Frischeverlust der Bohnen verhindert). Dabei kann die Ablage elektrisch oder durch die Abwärme (d.h. heiße Luft) des Heißwasser- oder Dampfkessels der Kaffeemaschine beheizt werden. Eine Beheizung ist auch über Heißwasser- und/oder Dampfleitungen eines Kesselwassersystems der Kaffeemaschine denkbar, welche mit der Ablagefläche der Tassenablage thermisch gekoppelt werden können.

Die Oberseite des Gehäuses bzw. der Maschinendeckel der Kaffeemaschine kann erfindungsgemäß auf mechanisch einfache Art und Weise als Tassenablage ausgebildet werden: Die Tassenablage bzw. der Deckel kann als selbsttragende Baugruppe realisiert sein, die in das Maschinengestellt bzw. Gehäuse der Maschine auf einfache Art und Weise eingehängt und beispielsweise über mehrere Schrauben gesichert werden kann. Durch Lösen der Schrauben (hier reichen zwei Schrauben zum sicheren Einhängen) kann die gesamte Baugruppe leicht entnommen werden, um den Zugang für Service- und Reparaturarbeiten an den Mühlen durch einen Kundendiensttechniker zu gewährleisten.

Die Verschiebung der Tassenablage kann in Richtung von vorne nach hinten (also von der Frontseite zur Rückseite der Kaffeemaschine) und zurück realisiert werden. Ebenso sind jedoch auch seitlich verschiebbare Ausführungen der Tassenablage (also senkrecht zur gedachten Verbindungslinie zwischen Front- und Rückseite der Kaffeemaschine und senkrecht zur Ebene der Tassenablage) denkbar.

Auch ist es möglich, eine z.B. mittig geteilte Tassenablage zu realisieren, die zwei einzelne Ablagenabschnitte aufweist, die unabhängig voneinander verschiebbar sind. Beispielsweise kann so ein Ablagenabschnitt nach links und der andere Ablagenabschnitt nach rechts verschiebbar sein (oder auch ein vorderer Ablagenabschnitt nach vorne und ein hinterer Ablagenabschnitt nach hinten verschiebbar sein). In diesem Fall können mehrere, in ihrer Anzahl der Zahl der Ablagenabschnitte entsprechende einzelne Bevorratungsräume einzeln freigegeben werden und wieder verschlossen werden (oder, bei geeigneter Kopplung der einzelnen Ablagenabschnitte, auch insgesamt freigegeben werden).

Erfindungsgemäß kann eine große beheizbare Tassenablage in flacher Bauform realisiert werden, die einen Zugang zu den einzelnen Bevorratungsbehältern auch bei vollgestellter Tassenablage ermöglicht. Ein einfaches Verschieben ermöglicht den Zugang zu den Bevorratungs- bzw. Produktbehältern (und ggfs. auch der Mahlgradverstellung) oder verhindert auch in der geschlossenen Position der Tassenablage den Zugriff während des Betriebs. Für einen Aus- und Einbau der einzelnen Mühlen bzw. Mahlwerke (oder der Mühle bzw. des Mahlwerkes) der Kaffeemaschine kann die gesamte Baugruppe der Tassenablage schnell und einfach ausgebaut werden.

Nachfolgend wird die vorliegende Erfindung anhand eines konkreten Konstruktions-Ausführungsbeispiels näher beschrieben.

Dabei zeigen:
- Figur 1:: Eine erfindungsgemäße elektrisch betriebene Kaffeemaschine in einer dreidimensionalen Außenansicht mit der Tassenablage in der ersten Position.
- Figur 2:: Dieselbe Maschine mit der Tassenablage in der zweiten Position.
- Figur 3:: Eine Aufsicht von oben auf die als selbsttragende Baugruppe ausgebildete Tassenablage mit dieser in der ersten Position.
- Figur 4:: Dieselbe Aufsicht, jedoch mit der Tassenablage in der zweiten Position.
- Figur 5:: Eine Seitenansicht, die die selbsttragende Baugruppe der Tassenablage in der eingeschobenen, ersten Position zeigt.
- Figur 6:: Dieselbe Seitenansicht, jedoch mit der Tassenablage in der ausgezogenen, zweiten Position.
- Figur 7:: Eine Seitenansicht mit einem Schnitt durch die Tassenablage.
- Figur 8a:: Eine weitere solche Seitenansicht.
- Figur 8b:: Eine Schnittansicht von vorne.

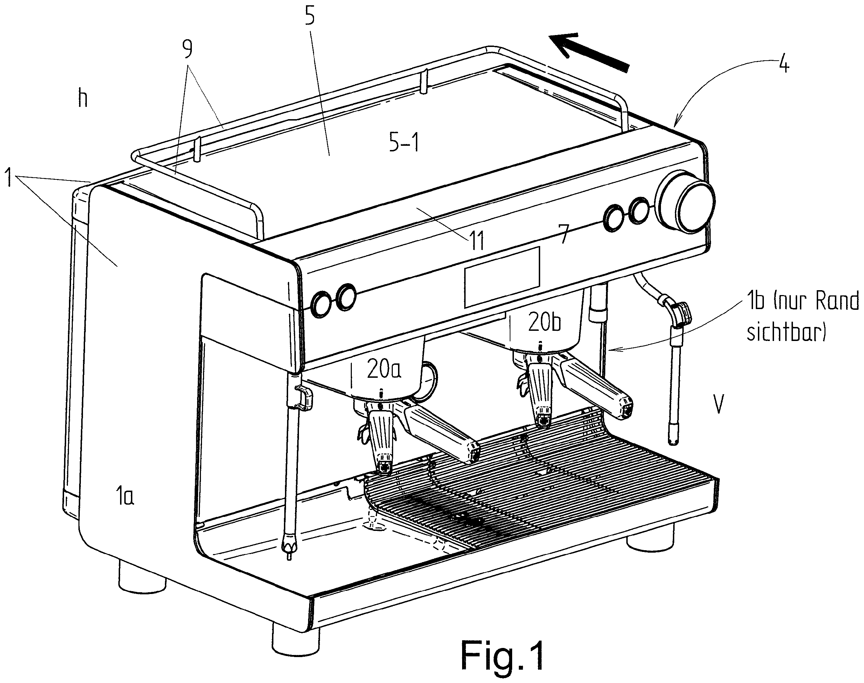

Figur 1 zeigt eine erfindungsgemäße, elektrisch betriebene Kaffeemaschine, deren Gehäuse 1 an der Vorderseite im oberen Drittel einen überkragenden Bereich aufweist, dessen vorderer Abschnitt 7 zur Bedienung der Kaffeemaschine ausgebildet ist. Unterhalb des überkragenden Bereiches bzw. der Bedienungsfront 7 ist eine sich etwa über zwei Drittel der Höhe der Kaffeemaschine erstreckende Aussparung vorgesehen, in der zwei Siebträger 20a, 20b (hier im eingesetzten Zustand) der Kaffeemaschine erkennbar sind.

Die Vorderseite der Kaffeemaschine bzw. der Raum vor dieser ist mit v gekennzeichnet. Die der Vorderseite gegenüberliegende Rückseite der Maschine bzw. der Raum dahinter mit h. Die Oberseite der gezeigten Kaffeemaschine bzw. des Gehäuses 1 derselben ist mit 4 gekennzeichnet.

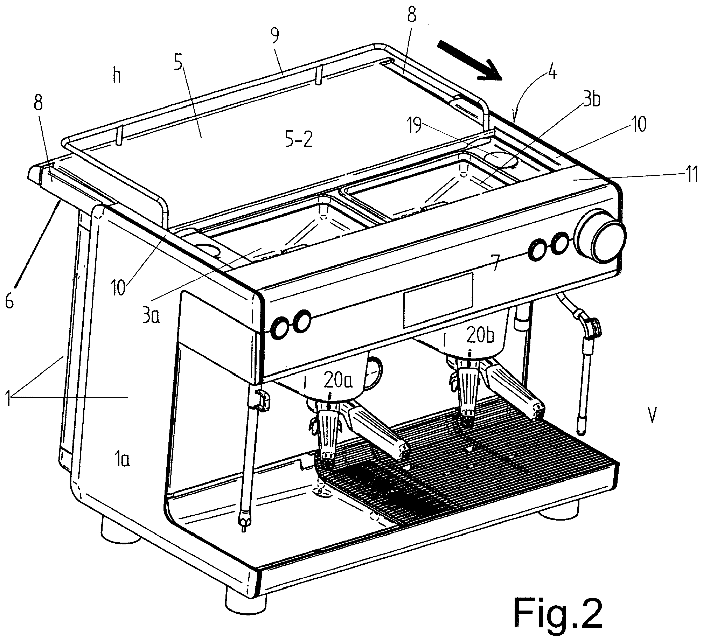

Wie Figuren 1 und 2 zeigen, weist die Oberseite 4 des Gehäuses 1 eine relativ zu den restlichen Bauelementen der Kaffeemaschine bzw. des Gehäuses 1 (also insbesondere relativ zu den Seitenwänden 1a und 1b, der Frontseite 7, den Siebträgern 20a, 20b und dem Maschinenboden) verschiebbare Tassenablage 5 auf. Figur 1 zeigt eine erste Position 5-1 dieser Tassenablage 5, bei der die Tassenablage 5 die im Inneren 2 des Gehäuses 1 integrierten beiden Bevorratungsräume 3a, 3b (vergleiche Figur 2) verschließt. Die Tassenablage 5 ist in der ersten Position 5-1 dazu oberhalb der Bevorratungsräume 3a, 3b so positioniert, dass sie die nach oben zugänglichen Bevorratungsräume 3a, 3b vollständig abdeckt. Wie Figur 1 (Pfeil) kennzeichnet, kann die Tassenablage 5 aus der ersten Position 5-1 nach hinten (also in Richtung von der Vorderseite v zur Rückseite h der Maschine) horizontal verschoben werden, um damit den Zugang zu den Bevorratungsräumen 3a, 3b von der Oberseite 4 des Gehäuses 1 her zu ermöglichen. Figur 2 zeigt dazu die Tassenablage 5 im vollständig nach hinten h geschobenen Zustand (zweite Position 5-2), in dem der der Frontseite 7 zugewandte, vordere Rand der Tassenablage 5 über den der Rückseite h zugewandten, hinteren Rand der Bevorratungsräume 3a, 3b hinweg verschoben ist, so dass die gesamte Fläche der Bevorratungsräume 3a, 3b von oben 4 her zugänglich ist. Wie der Pfeil in Figur 2 zeigt, kann die Tassenablage 5 aus der zweiten Position 5-2 wieder nach vorne v geschoben werden, um die beiden hier als Bohnenbehälter ausgebildeten Bevorratungsräume 3a, 3b wieder vollständig zu verschließen. Seitlich des zweiten Bevorratungsraumes 3b ist die Mahlgradverstellung 19 der Kaffeemaschine erkennbar.

Die Tassenablage 5 weist auf ihrer dem Maschinenboden abgewandten Oberseite eine entlang der hinteren h, rückwärtigen Wand der Maschine und entlang der beiden Seitenwände der Maschine (sichtbar ist hier nur die Seitenwand 1a), jedoch nicht entlang der vorderen v Seite bzw. der Frontseite 7 der Maschine verlaufendes Geländer 9 auf. Dieses verhindert, dass von der Oberseite 4 auf die Tassenablage 5 aufgestellte Tassen oder dergleichen nach hinten h oder seitlich über die Oberseite 4 des Gehäuses bzw. die Tassenablage 5 versehentlich hinausgeschoben werden.

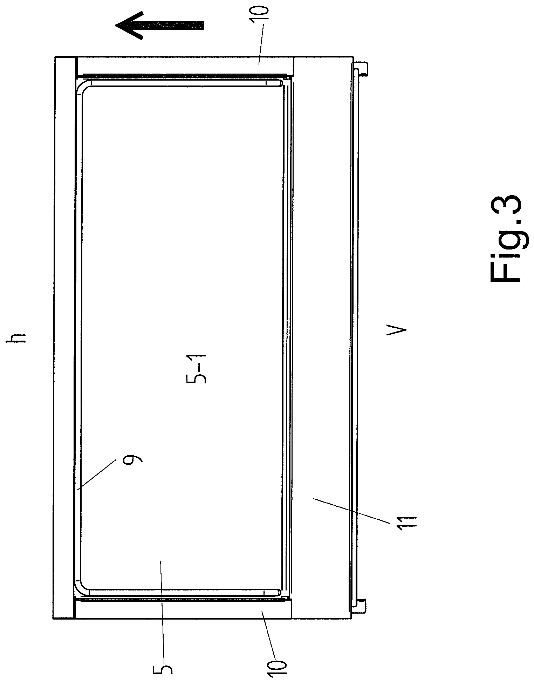

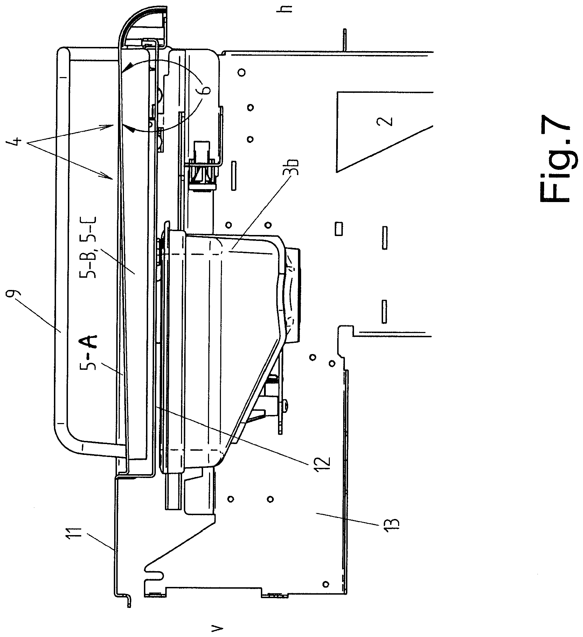

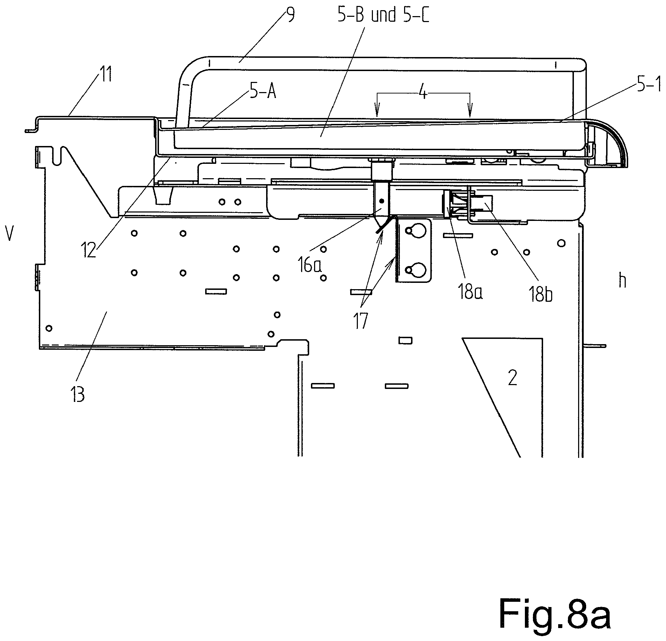

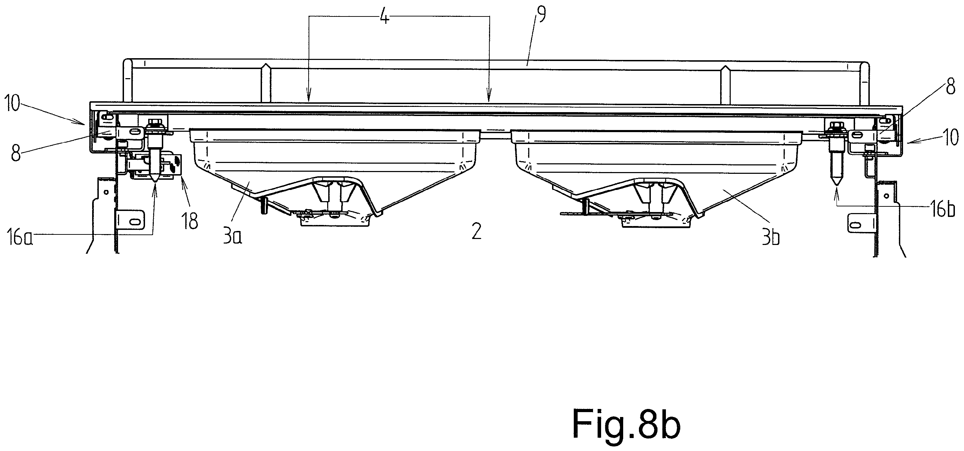

Figuren 2 bis 6 zeigen die Ausbildung der als selbsttragende Baugruppe ausgebildeten Tassenablage 5 bzw. verschieblichen Oberseite 4 des Gehäuses 1 genauer. Identische Bezugszeichen (dies gilt ebenso für die Figuren 7, 8a und 8b) zeigen identische Bauelemente wie in den Figuren 1 und 2.

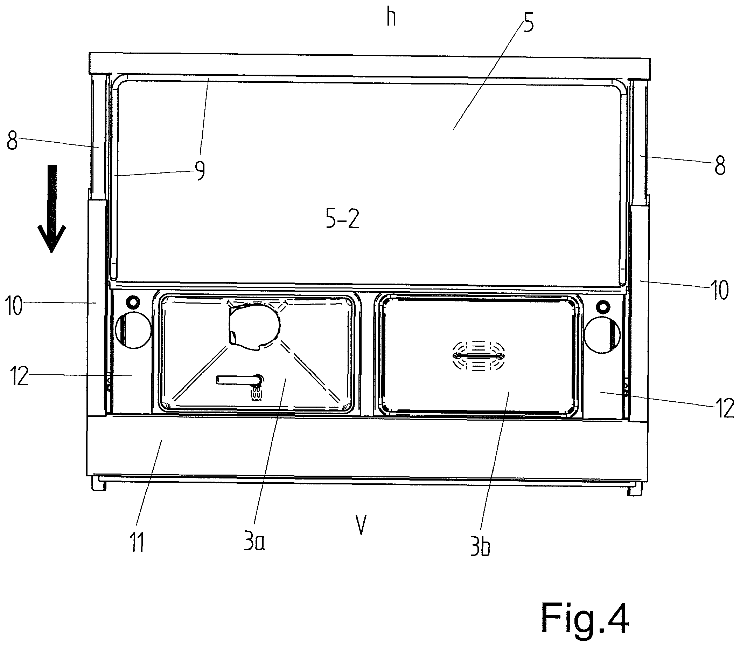

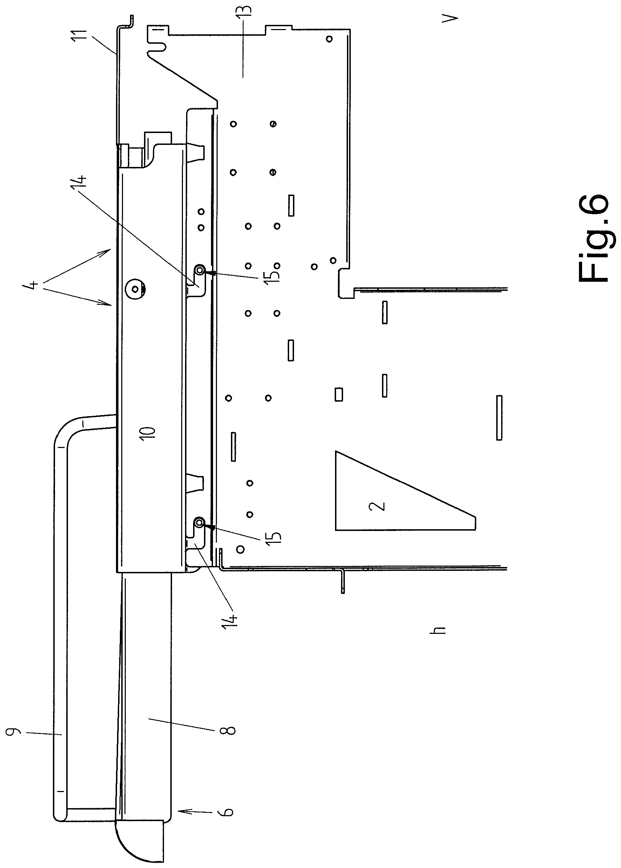

Wie die Aufsicht der Figur 4 in der nach hinten h ausgezogenen, zweiten Position 5-2 der Tassenablage 5 zeigt (siehe auch Figuren 2 und 6), sind an der Oberseite 4 des Gehäuses 1 zwei Seitenträger 10 starr mit den beiden sich seitlich gegenüberliegenden Außenwänden 1a, 1b des Gehäuses 1 verbunden (hier: verschraubt). In diesen Seitenträgern befinden sich relativ zu den Seitenträgern 10 verschieblich gelagerte, um eine vordefinierte Wegstrecke nach hinten h ausziehbare Teleskopschienen 8, die alternativ auch als Auszugschienen 8 bezeichnet sind. An den Auszugschienen 8 ist die Tassenschublade 5 fixiert (festgeschraubt). Die beiden an den Außenseiten 1a, 1b des Gehäuses 1 liegenden Seitenträger 10 sind durch ein einstückig ausgebildetes, einen Zwischenboden 12 sowie einen Querträger 11 aufweisendes Element fest verbunden. Dieses Element ist mit den beiden Seitenträgern 10 verschraubt. Der Querträger 11 verläuft auf Höhe der Oberkante der Seitenträger, quer zu diesen, zwischen ihnen und entlang der Frontseite bzw. Vorderseite 7 der Maschine. Auf der der Vorderseite 7 gegenüberliegenden Seite des Querträgers 11 verläuft der Zwischenboden 12 relativ zum Querträger 11 abgesenkt, das heißt etwa auf der Höhe der Unterkante der beiden Seitenträger 10 (vergleiche hierzu auch Figur 7). Wie Figur 4 zeigt, sind im Zwischenboden 12 an seiner dem Querträger 11 zugewandten Seite zwei Ausschnitte vorgesehen, in denen die sich zum Boden der Kaffemaschine hin trichterförmig verjüngenden, die beiden Bevorratungsräume 3a, 3b ausbildenden Einsätze positioniert sind. Der Einsatz des Bevorratungsraums 3b ist hier mit einem Deckel versehen. Es ist eine selbsttragende Baugruppe ausgebildet (nachfolgend auch als Taschenschublade bezeichnet), wobei diese Baugruppe neben der Tassenablage 5 die vorbeschriebenen Bauelemente 8, 9, 10, 11 und 12 umfasst. Die Bohnenbehältereinsätze 3a und 3b werden vor einem Ausbau der Tassenschublade (die zur Aufnahme und Ausrichtung dieser Behälter 3a, 3b dient) von oben entnommen, können somit auch als nicht zur Tassenschublade gehörig angesehen werden.

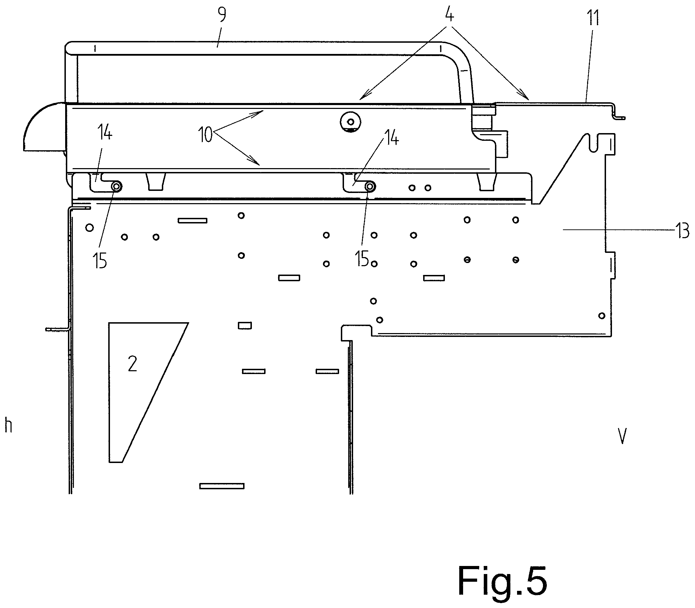

Figuren 5 und 6 zeigen, wie diese Baugruppe in ein Gestell 13, das hier einen Teil des Gehäuses 1 der Kaffeemaschine ausbildet und von dem lediglich eine Gestellseitenwand sichtbar ist, eingehängt werden kann. Damit kann die Baugruppe am Gestell 13 und somit am Gehäuse 1 fixiert werden. Die dieser Baugruppe bzw. der Tassenablage 5 zugewandte Oberkante der in Figur 5 sichtbaren Gestellseitenwand weist dazu zwei abgewinkelte, nach oben, also zur Oberseite 4 des Gehäuses 1 hin offene Langlöcher 14 auf (dies gilt ebenso für die gegenüberliegende, zweite Gestellseitenwand). Korrespondierend dazu sind an der Unterkante jedes der beiden Seitenträger 10 jeweils zwei zur Außenseite (also zu den Seitenwänden 1a, 1b) hin überkragende Haltebolzen 15 fixiert (verschraubt). Jeweils ein Haltebolzen 15 und ein Langloch 14 sind dabei nahe dem der Hinterseite h zugewandten Ende der Elemente 10, 13 positioniert, jeweils ein Haltebolzen 15 und ein Langloch 14 weiter vorne, also nahe der Vorderseite v.

Figur 5 zeigt die Baugruppe im eingezogenen Zustand der ersten Position 5-1, Figur 6 zeigt die Baugruppe im nach hinten ausgezogenen Zustand, also in der zweiten Position 5-2. Die Unterseite der Tassenablage 5 bzw. der Baugruppe ist dabei mit dem Bezugszeichen 6 bezeichnet.

Figur 7 zeigt den mehrlagigen Aufbau der Tassenablage 5: Von der Oberseite 4 zum Boden der Maschine gesehen weist die Tassenablage 5 eine erste Lage 5-A (hier: ein Edelstahlblech) zum Aufstellen von Tassen sowie zwei darunterliegende, hier integriert ausgebildeten Lagen, nämlich eine zweite, als elektrische Heizfolie ausgebildete Lage 5-B und eine diese abdeckende dritte, als Isolierschicht ausgebildete Lage 5-C auf.

Figuren 8a (Seitenansicht aus dem Inneren der Maschine bzw. des Gehäuses 2 auf die linke Gestellseitenwand ohne Bohnenbehälter 3a, 3b) und Figur 8b (Ansicht von vorne v nach hinten h mit den Bevorratungsräumen bzw. Bohnenbehältern 3a, 3b) zeigen wie die die Tassenablage 5 umfassende, selbsttragende Baugruppe am Gehäuse 1 bzw. Gestellt 13 so fixiert werden kann, dass die Seitenträger 10 relativ zum Gehäuse 1 bzw. Gestellt 13 unbeweglich sind und die Tassenschublade bzw. Baugruppe samt Tassenablage 5 relativ zum Gehäuse 1 bzw. Gestell 13 nach hinten h und wieder zurück v horizontal verschoben werden kann.

Auf den beiden den Seitenwänden 1a, 1b zugewandten Außenseiten sind dazu an der Unterseite des Zwischenbodens 12 in letzterem zwei auf der Unterseite des Zwischenbodens 12 hervorstehende Verriegelungsbolzen 16a, 16b angeschraubt. Korrespondierend mit dem unteren Ende jedes Verriegelungsbolzens 16a, 16b tragen die beiden den Seitenwänden 1a, 1b zugewandten Gestellseitenwände des Gestells 13 mit letzteren verschraubte Verriegelungsbleche 17. Die Verriegelungsbleche 17 sind so ausgeformt und positioniert sowie mit einem Eingriff für den jeweiligen Verriegelungsbolzen 16a, 16b versehen, dass sich die Verriegelungsbolzen nach dem Einhängen der die Tassenablage umfassenden Baugruppe (über die Haltebolzen 15 in die Langlöcher 14 in die in Figur 5 gezeigte Position) im Eingriff mit den Eingriffen an den Verriegelungsblechen 17 stehen. Dieses Eingreifen verhindert ein horizontales Verschieben der Baugruppe nach hinten h (wobei, wie Figur 5 zeigt, in dieser Position ein Verschieben der Baugruppe nach vorne v durch die am Ende der Langlöcher 14 anschlagenden Haltebolzen 15 verhindert ist). Die nicht verschiebbaren Teile der Baugruppe sind somit am Gestellt 13 bzw. dem Gehäuse 1 ortsfest fixiert.

Erfindungsgemäß ist somit ein Aufbau einer selbsttragenden Baugruppe mit der Tassenablage 5, den beiden Seitenträgern 10 links und rechts und mit dem Zwischenboden 12 samt dem Querträger 11 ermöglicht. In den Seitenträgern 10 sind die Teleskopschienen 8 verschiebbar gelagert, an denen wiederum die Tassenablage 5 fixiert ist. Die Baugruppe samt der Tassenablage 5 kann zwischen den Seitenwänden 1a, 1b in das Gestell 13 eingesetzt werden und liegt auf der Oberseite der Gestellseitenwände auf. Dabei werden die insgesamt vier Haltebolzen 14 in die nach oben vier offenen, abgewinkelten Langlöcher 15 der Gestellseitenwände eingefädelt und dann nach vorne v in die Endposition, vergleiche hierzu Figur 5, geschoben. Dadurch ist die selbsttragende Baugruppe mit ihrer Tassenablage 5 in ihrer Lage seitlich, also links/rechts, sowie in ihrer Höhe und nach vorne v fixiert. Die Fixierung nach hinten h wird durch die beiden Verriegelungsbolzen 16a, 16b mit ihren korrespondierenden Verriegelungsblechen 17 sichergestellt. Gemäß Figur 6 kann somit die Baugruppe bzw. Tassenschublade horizontal nach hinten geschoben werden, ohne dass sie sich anhebt.

Die Tassenablage 5 umfasst die erste Lage 5-A aus Edelstahlblech, auf deren Unterseite 6 eine elektrische Heizfolie 5-B aufgeklebt ist. Die Heizfolie 5-B ist durch eine Isolierschicht 5-C nach unten zum Maschinenboden hin abgedeckt. In der eingeschobenen Position 5-1 sind die beiden Bohnenbehälter 3a, 3b nach oben hin vollständig durch die Isolationslage 5-C abgedeckt, so dass sich über die gesamte Flächenausdehnung der Heizfolie 5-B zwischen dieser und dem Bohnenbehälter die Isolationslage 5-C befindet. Alternativ ist es auch denkbar (hier nicht gezeigt) anstatt der Heizfolie 5-B ein mäanderförmiges Rohr als zweite Lage 5-B zu verwenden, mit dem die erste Lage 5-A in thermischer Verbindung steht (das Rohr ist dann ebenfalls durch eine Isolationsschicht 5-C abzudecken). Ein solches Rohr 5-B kann beispielsweise über Schnellverschlüsse mit der Heißwasserversorgung der Kaffeemaschine (nicht gezeigt) verbindbar oder verbunden sein und somit stetig durch Heißwasser zum Aufheizen des Edelstahlblechs 5-A durchflossen sein.

Ebenfalls kann alternativ die Isolierung 5-B mit einem Abstand vom Edelstahlblech 5-A mit letzterem verbunden sein. Im so ausgebildeten Zwischenraum kann über einen Kamin im hinteren h Teil der Maschine das Edelstahlblech 5-A mit der Abwärmeabfuhr des Heißwasserkessels der Kaffeemaschine (nicht gezeigt) verbunden sein. Über den Kamin kann dann vom Heißwasserkessel die Abwärme in den Zwischenraum aufsteigen und über den Zwischenraum das Edelstahlblech 5-A von unten heizen.

Die Heiztemperatur der Tassenablage 5 bzw. des Edelstahlblechs 5-A kann elektrisch oder über Durchflussquerschnitte geregelt werden. Die Regelung erfolgt dabei so, dass die zulässige Oberflächentemperatur für Berührungen nicht überschritten wird.

Da die Bohnenbehälter bzw. deren Einsätze 3a, 3b von oben 4 in den Zwischenboden 12 eingehängt sind, können diese passgenau über den darunterliegenden Mahlwerken der Kaffeemaschine (hier nicht gezeigt) in Position gebracht werden. Beim Ausbau der selbsttragenden Baugruppe bzw. der Tassenschublade zu Wartungszwecken werden die Bohnenbehälter bzw. die Einsätze derselben 3a, 3b von oben 4 entnommen. Hierzu können die Einsätze an ihrem unteren Auslauf verschlossen werden.

Die Verriegelungsbolzen 16a, 16b sind am Zwischenboden 12 der Tassenschublade verschraubt und greifen von dort hinter die relativ zur Vertikalen um 45° abgewinkelten Verriegelungsblechabschnitte der Verriegelungsbleche 17 (wobei letztere mit den Gestellseitenwänden des Gestells 13 verschraubt sind). Somit ist die Tassenschublade bzw. die Tassenablage 5 in der in den Figuren 5 sowie 8a, 8b gezeigten Position auch nach hinten h fixiert und in ihrer Lage vollständig positioniert. Die Verriegelungsbolzen 16a können (statt in den Zwischenboden 12 eingeschraubt zu sein) auch über Druckfedern oder allein durch ihre Schwerkraft in ihrer Position gehalten werden.

Wie Figur 8b zeigt, weist die Kaffeemaschine eine elektrische Steckverbindung 18 auf, um trotz der Verschiebbarkeit der Tassenablage 5 eine elektrische Verbindung zwischen den sich (unbeweglich) im Inneren 2 des Gehäuses 1 der Maschine befindlichen elektrischen Betriebselementen (z.B. Steuereinrichtung der Kaffeemaschine sowie Ansteuerung der Heizung der Tassenablage 5) und dem an der Tassenschublade bzw. der Tassenablage 5 befindlichen elektrischen Betriebselementen (z.B. Heizdrähte der Heizfolie 5-B) herzustellen. Diese Steckverbindung 18 umfasst zwei korrespondierende Steckelemente 18a, 18b, wobei das Steckelement 18a an einer der Gestellseitenwände des Gestells 13 fixiert ist. Das zum Element 18a korrespondierende Steckelement 18b ist an dem dieser Gestellseitenwand zugewandten Seitenträger 10 fixiert. Die beiden Steckelemente 18a, 18b werden durch die Vorwärtsbewegung beim Einsetzen der Tassenschublade in das Gestellt 13 miteinander verbunden, somit wird ein elektrischer Kontakt zum Versorgen der Heizfolie 5-B mit elektrischem Strom geschlossen. Beim Auf- und Zuschieben der Tassenablage 5 bzw. der entsprechenden Baugruppe kann die Heizung beispielsweise über ein Schleppkabel (nicht gezeigt) weiter verbunden sein, oder über Kontaktpunkte an der Tassenschublade und Kontaktflächen am Zwischenboden 12 verbunden sein. Im letzteren Fall ist jedoch die Tassenablage 5 im geöffneten Zustand 5-2 nicht beheizt, da der Stromkreis erst im geschlossenen Zustand 5-1 geschlossen wird.

## Patentansprüche

1. Elektrisch betriebene Kaffeemaschine mit einem Gehäuse (1) und einem oder mehreren zumindest abschnittsweise in das Innere (2) des Gehäuses (1) integrierten Bevorratungsraum/räumen (3a, 3b), wobei die Kaffeemaschine eine oder mehrere eingebaute Mühle(n) aufweist, und
dass die Oberseite (4) des Gehäuses (1) als relativ zu dem/den zur Aufnahme von ungemahlenen Kaffeebohnen oder von gemahlenem Kaffeemehl ausgebildeten Bevorratungsraum/räumen (3a, 3b) verschiebbare und/oder verschwenkbare Tassenablage (5) ausgebildet ist oder eine solche Tassenablage (5) aufweist, **dadurch gekennzeichnet, dass** der/die Bevorratungsraum/räume von der Oberseite (4) des Gehäuses (1) her durch einen Benutzer befüllbar ist/sind, indem die Tassenablage (5) von einer ersten Position (5-1), in der sie den/die Bevorratungsraum/räume verschließt, in eine zweite Position (5-2), in der der/die Bevorratungsraum/räume zum Befüllen zugänglich ist/sind, und wieder zurück verschiebbar und/oder verschwenkbar ist.

2. Kaffeemaschine nach dem vorhergehenden Anspruch,
***dadurch gekennzeichnet, dass***
die Tassenablage (5), bevorzugt an ihrer dem Inneren (2) des Gehäuses (1) zugewandten Unterseite (6), beheizbar ist.

3. Kaffeemaschine nach dem vorhergehenden Anspruch,
***dadurch gekennzeichnet, dass***
die Tassenablage (5) elektrisch beheizbar ist, mittels thermischer Kopplung an eine Heißwasser- und/oder Dampfleitung der Kaffeemaschine, insbesondere eines Kesselwassersystems der Kaffeemaschine, beheizbar ist und/oder durch thermische Kopplung an die Abwärme eines Heißwasser- oder Dampferzeugers der Kaffeemaschine beheizbar ist.

4. Kaffeemaschine nach einem der vorhergehenden Ansprüche,
***dadurch gekennzeichnet, dass***
die Oberseite (4) des Gehäuses (1) lediglich als relativ zu dem/den Bevorratungsraum/räumen (3a, 3b) verschiebbare, nicht aber verschwenkbare Tassenablage (5) ausgebildet ist oder eine solche Tassenablage (5) aufweist,
wobei vorzugsweise die Verschiebbarkeit entweder zu einer zur Bedienung der Kaffeemaschine ausgebildeten Vorderseite (7) des Gehäuses (1) hin und wieder von dieser Vorderseite (7) weg oder seitlich zu dieser Vorderseite (7) realisiert ist.

5. Kaffeemaschine nach einem der vorhergehenden Ansprüche,
***dadurch gekennzeichnet, dass***
eine selbsttragende Baugruppe, die die Tassenablage (5) umfasst, ausgebildet ist, wobei diese Baugruppe in ein Gestell (13) der Kaffeemaschine und/oder in ein oder mehrere Bauelement(e) des Gehäuses (1) der Kaffeemaschine einhängbar ist oder eingehängt ist.

6. Kaffeemaschine nach einem der vorhergehenden Ansprüche, bevorzugt nach dem vorhergehenden Anspruch,
***dadurch gekennzeichnet, dass***
die Tassenablage (5) vermittels Auszugschienen (8), bevorzugt über Teleskopschienen, relativ zu dem/den Bevorratungsraum/räumen (3a, 3b) verschiebbar ist.

7. Kaffeemaschine nach einem der vorhergehenden Ansprüche,
***dadurch gekennzeichnet, dass***
die Tassenablage (5) einen mehrlagigen Aufbau mit einer ersten Lage (5-A) zur Ablage von Tassen, einer zweiten, zum Heizen der ersten Lage (5-A) ausgebildeten Lage (5-B), und einer dritten, als thermische Isolationslage ausgebildeten Lage (5-C) aufweist oder daraus besteht.

8. Kaffeemaschine nach einem der vorhergehenden Ansprüche,
***dadurch gekennzeichnet, dass***
die Kaffeemaschine mindestens einen Bevorratungsraum, bevorzugt aber mehrere, insbesondere genau zwei, Bevorratungsräume aufweist und dass die Tassenablage mehrere, bei mehreren Bevorratungsräumen bevorzugt in ihrer Anzahl genau der Anzahl an Bevorratungsräumen entsprechende Zahl von jeweils voneinander unabhängig verschiebbaren und/oder verschwenkbaren Ablagenabschnitten aufweist,
wobei bei mehreren Bevorratungsräumen bevorzugt jeder der Ablagenabschnitte zum Verschließen und zum wieder Freigeben eines Zugangs zu genau einem der Bevorratungsräume ausgebildet ist.

## Claims

1. An electrically operated coffee machine with a housing (1) and one or more storage chamber(s) (3a, 3b) integrated at least in portions in the interior (2) of the housing (1),
wherein
the coffee machine has one or more built-in grinder(s), and
that the upper side (4) of the housing (1) is designed as a cup rest (5) which is displaceable and/or pivotable relative to the storage chamber(s) (3a, 3b) designed for receiving non-ground coffee beans or ground coffee grounds, or has such a cup rest (5), **characterised in that**
the storage chamber(s) can be filled by a user from the upper side (4) of the housing (1), **in that** the cup rest (5) can be displaced and/or can be pivoted from a first position (5-1), in which it closes the storage chamber(s), into a second position (5-2), in which the storage chamber(s) is/are accessible for filling purposes, and back again.

2. A coffee machine according to the preceding claim,
**characterised in that**
the cup rest (5) is heatable, preferably on its bottom side (6) which faces the interior (2) of the housing (1).

3. A coffee machine according to the preceding claim,
**characterised in that**
the cup rest (5) is electrically heatable, is heatable by means of thermal coupling to a hot-water and/or steam line of the coffee machine, in particular of a boiler water system of the coffee machine, and/or is heatable by thermal coupling to the waste heat of a hot-water or steam generator of the coffee machine.

4. A coffee machine according to one of the preceding claims,
**characterised in that**
the upper side (4) of the housing (1) is formed merely as a cup rest (5) which is displaceable, but not pivotable, relative to the storage chamber(s) (3a, 3b), or has such a cup rest (5),
wherein preferably the displaceability is realised either towards a front side (7) of the housing (1) designed for operating the coffee machine and back away from this front side (7) or laterally to this front side (7).

5. A coffee machine according to one of the preceding claims,
**characterised in that**
a self-supporting assembly which comprises the cup rest (5) is formed, this assembly being able to be mounted or being mounted in a frame (13) of the coffee machine and/or in one or more structural element(s) of the housing (1) of the coffee machine.

6. A coffee machine according to one of the preceding claims, preferably according to the preceding claim,
**characterised in that**
the cup rest (5) is displaceable by means of pull-out rails (8), preferably by means of telescopic rails, relative to the storage chamber(s) (3a, 3b).

7. A coffee machine according to one of the preceding claims,
**characterised in that**
the cup rest (5) has or consists of a multi-layer construction with a first layer (5-A) for resting cups on, a second layer (5-B) designed for heating the first layer (5-A), and a third layer (5-C), designed as a thermal insulation layer.

8. A coffee machine according to one of the preceding claims,
**characterised in that**
the coffee machine has at least one storage chamber, but preferably a plurality of, in particular exactly two, storage chambers, and **in that** the cup rest has a plurality of, in the case of a plurality of storage chambers a number preferably corresponding in number exactly to the number of storage chambers, of in each case rest portions which are displaceable and/or pivotable independently from each other,
with in the case of a plurality of storage chambers preferably each of the rest portions being designed for closing and releasing again access to exactly one of the storage chambers.

## Revendications

1. Cafetière électrique avec un boîtier (1) et un ou plusieurs réservoirs (3a, 3b), intégrés, au moins à certains endroits, dans l'intérieur (2) du boîtier (1),
la cafetière comprenant un ou plusieurs moulin(s) intégré(s) et
le côté supérieur (4) du boîtier (1) étant conçu comme un porte-tasse (5) pouvant être coulissé et/ou pivoté par rapport au(x) réservoir(s) (3a, 3b) conçus pour le logement de grains de café non moulus ou de café moulu ou comprenant un tel porte-tasse (5),
**caractérisée en ce que**
le(s) réservoir(s) peu(ven)t être rempli(s) à partir du côté supérieur (4) du boîtier (1) par un utilisateur en faisant coulisser et/ou pivoter le porte-tasse (5) d'une première position (5-1), dans laquelle il ferme le(s) réservoir(s), vers une deuxième position (5-2), dans laquelle le(s) réservoir(s) est/sont accessible(s) pour le remplissage, et inversement.

2. Cafetière selon la revendication précédente,
**caractérisée en ce que**
le porte-tasse (5) peut être chauffé, de préférence au niveau de son côté inférieur (6) orienté vers l'intérieur (2) du boîtier (1).

3. Cafetière selon la revendication précédente,
**caractérisée en ce que**
le porte-tasse (5) peut être chauffé électriquement au moyen d'un couplage thermique à une conduite d'eau chaude et/ou de vapeur de la cafetière, plus particulièrement au moyen d'un système de chaudière de la cafetière et/ou par couplage thermique à la chaleur dégagée par un générateur d'eau chaude ou de vapeur de la cafetière.

4. Cafetière selon l'une des revendications précédentes,
**caractérisée en ce que**
le côté supérieur (4) du boîtier (1) est conçu uniquement comme un porte-tasse (5) coulissant mais non pivotant par rapport au(x) réservoir(s) (3a, 3b), ou comprend un tel porte-tasse (5),
le caractère coulissant étant réalisé de préférence soit vers un côté avant (7) du boîtier (1) conçu pour l'utilisation de la cafetière et à partir de ce côté avant (7) soit latéralement par rapport à ce côté avant (7).

5. Cafetière selon l'une des revendications précédentes,
**caractérisée en ce que**
un sous-ensemble autoporteur qui comprend le porte-tasse (5) est prévu, ce sous-ensemble pouvant être suspendu ou étant suspendu dans un châssis (13) de la cafetière et/ou dans un ou plusieurs composant(s) du boîtier (1) de la cafetière.

6. Cafetière selon l'une des revendications précédentes, de préférence selon la revendication précédente,
**caractérisée en ce que**
le porte-tasse (5) peut être coulissé au moyen de rails (8), de préférence des rails télescopiques, par rapport au(x) réservoir(s) (3a, 3b).

7. Cafetière selon l'une des revendications précédentes,
**caractérisée en ce que**
le porte-tasse (5) comprend ou est constitué d'une structure multicouche avec une première couche (5-A) pour la pose de tasses, une deuxième couche (5-B) pour le chauffage de la première couche (5-A) et une troisième couche (5-C) conçue comme une couche d'isolation thermique.

8. Cafetière selon l'une des revendications précédentes,
**caractérisée en ce que**
la cafetière comprend au moins un réservoir de préférence plusieurs, plus particulièrement exactement deux, réservoirs et **en ce que** le porte-tasse comprend plusieurs portions de pose dont le nombre correspond, dans le cas de plusieurs réservoirs, exactement au nombre de réservoirs, et qui sont coulissantes et/ou pivotantes indépendamment entre elles,
chacune des portions de pose étant conçue de préférence, dans le cas de plusieurs réservoirs, pour la fermeture et pour la libération d'un accès à exactement un des réservoirs.
